Europäisches Patentamt

European Patent Office

Office européen des brevets

(19)

(11) Numéro de publication : **0 143 066
B1**

(12) **FASCICULE DE BREVET EUROPÉEN**

(45) Date de publication du fascicule du brevet :
04.03.87

(51) Int. Cl.⁴ : **A 47 J 39/00, F 25 D 31/00**

(21) Numéro de dépôt : **84430035.0**

(22) Date de dépôt : **08.10.84**

(54) **Dispositif de distribution de repas avec effets frigorifiques d'attente et de rechauffements intégrés.**

(30) Priorité : **14.10.83 FR 8316506**

(43) Date de publication de la demande :
**29.05.85 Bulletin 85/22**

(45) Mention de la délivrance du brevet :
**04.03.87 Bulletin 87/10**

(84) Etats contractants désignés :
**BE CH DE GB IT LI NL SE**

(56) Documents cités :
**FR-A- 2 231 184
FR-A- 2 411 368
FR-A- 2 474 852
GB-A- 2 066 441
US-A- 2 943 452
US-A- 4 002 199
US-A- 4 307 286**

(73) Titulaire : **Grandi, René
Quartier Loudon -Ruy
F-38300 Bourgoin Jallieu (FR)**

(72) Inventeur : **Grandi, René
Quartier Loudon -Ruy
F-38300 Bourgoin Jallieu (FR)**

(74) Mandataire : **Roman, Alphonse
35 Rue Paradis
F-13001 Marseille (FR)**

## Description

Dispositif de distribution de repas avec effets frigorifiques d'attente et de réchauffements intégrés.

Il est destiné à permettre d'une part la conservation des plats cuisinés en armoires frigorifiques et d'autre part, soit la cuisson intégrale, soit le réchauffement total ou partiel de l'ensemble au moment de leur consommation.

On connaît déjà un dispositif distributeur de repas correspondant au préambule de la revendication 1 (GB-A-2 066 441).

L'expérience a démontré que les capacités à chambres multiples séparables ou communiquantes ne permettaient pas avec des cloisons thermiques verticales d'avoir une étanchéité entre les espaces chauds et froids, ces appareils étaient de ce fait inutilisables car ils ne permettaient pas d'assurer une conservation frigorifique et d'assurer en même temps que le refroidissement dans un secteur, le réchauffement simultané des autres secteurs pour porter à leur température de consommation les denrées en attente. .

C'est le cas du brevet GB-A-2 066 441, dont la complexité des éléments rend le fonctionnement complexe et finalement inopérant quant à la circulation et la régulation des veines thermiques et avec chambres non superposées.

Le dispositif suivant l'invention supprime ces inconvénients et permet d'assurer dans l'ensemble de la capacité, soit un refroidissement ou un réchauffement, soit un refroidissement d'un secteur ou plusieurs secteurs et le réchauffement des autres. Ce réchauffement pouvant assurer la cuisson des plats.

Il est constitué par un dispositif selon la revendication 1. Des modes particuliers de réalisation de l'invention apparaissent dans les revendications dépendantes 2 à 4.

Sur les dessins annexés, donnés à titre d'exemple non limitatif, d'une des formes de réalisation de l'objet de l'invention :

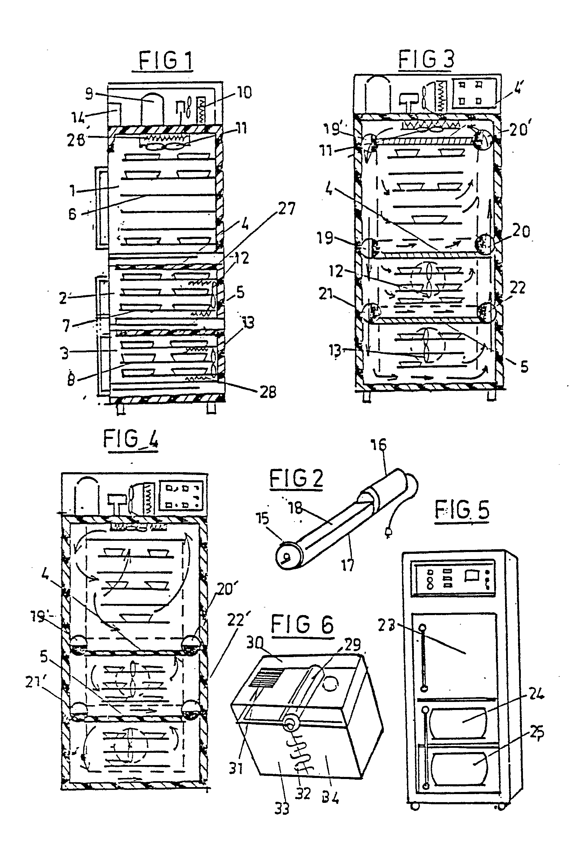

La figure 1 représente vu en élévation, en coupe et de profil, l'armoire dans son ensemble à étages thermiques superposés. La figure 2 représente l'écran thermique cylindrique à ouverture éclipsable. Les figures 3 et 4 montrent en élévation les armoires pourvues des écrans thermiques pour étages superposés. Les figures 5, 6 représentent les applications du dispositif.

L'armoire, figure 1, est formée par une capacité verticale étanche et à parois isothermes pourvues des compartiments 1, 2, 3 séparés par des cloisons horizontales 4, 5, 4bis. Chaque étage est muni d'étagères 6, 7, 8 porteuses de barquettes ou de plats pré-cuisinés. On peut utiliser des chariots à étagères pour faciliter la distribution des plats.

L'ensemble réfrigérant et chauffant comporte un générateur de froid 9, un condenseur 10 avec des accélérateurs répartiteurs formés par le ventilateur de refroidissement 11, avec son évaporateur 26, les ventilateurs 12, 13 avec résistances chauffantes 27, 28. Le tout permettant une climatisation interne par air pulsé.

L'ensemble thermique peut être constitué par absorption compression ou autre, pour les éléments portatifs, fig. 6, on utilise des thermo-éléments à effet Peltier générant à la commande des générateurs de froid ou générateurs de chaleur dont on déflecte le flux chaud ou froid suivant les applications.

Comme moyens de chauffage un générateur de chaleur avec résistances est utilisé. Les dispositifs réfrigérants peuvent être à compression, par azote liquide, carbo-glace etc... Les flux réfrigérants ou réchauffants sont défectés suivant les applications. Un programmateur 14 est placé à la partie haute de l'armoire pour commander le compresseur, les générateurs de froid, les générateurs de chaleur et la télécommande des écrans thermiques placés entre les chambres thermiques.

Les cloisons horizontales 4, 5, 4bis, ont des espaces intercalaires latéraux recevant les écrans thermiques cylindriques, fig. 2.

Ces écrans sont constitués par des secteurs cylindriques 15, 16 obturant, formant paliers et recevant des garnitures toriques d'étanchéité.

Ces deux secteurs cylindriques sont reliés par une section semi-cylindrique 17 d'obturation avec espace d'écoulement de fluides 18 correspondant à un vide semi diamétral.

Chaque écran thermique est pourvu d'un moteur protégé par le secteur 16 qui fait effectuer à la commande une rotation de 45° environ. Ces barrières thermiques sont démontables afin de les nettoyer.

Ces écrans thermiques 19, 20, 21, 22, 19', 20' prennent les positions d'obturation ou d'ouverture. L'armoire a des portes d'accès 23, 24, 25, fig. 5, correspondantes aux chambres 1, 2, 3.

Par contre, en obturant les écrans thermiques d'un ou de deux étages on peut, ou réfrigérer ou réchauffer l'un d'eux sans modifier la température des autres.

On peut régler à l'avance les heures de réfrigération et d'échauffement. La circulation de l'air froid ou chaud est accélérée par l'effet des ventilateurs ou hélices de brassage 11, 12, 13. Pour le réchauffement on utilise les résistances 27, 28. Le ventilateur 11 brasse l'air froid.

Ce même écran thermique cylindrique 29 manœuvrable à main, fig. 6, est utilisable sur les réfrigérateurs réchauffeurs portatifs 30, avec système chauffant par résistance 32 et réfrigérant 31 thermo-élément ou Peltier, absorption ou carbo, comportant deux ou plusieurs cloisonnements 33, 34.

Ce dispositif distributeur de repas avec effet réfrigérant de conservation et chambres de chauffes intégrées par changement thermique total ou partiel est industriellement utilisable par la combinaison des cloisons horizontales sur les écrans thermiques semi cylindriques.

On peut cuisiner dans ces différents fours à des températures différentes (pâtisseries, viandes, légumes, etc). En commandant les vannes de cloisonnement on peut envoyer des frigories pour refroidir rapidement et stocker à froid en attendant le réchauffement et la distribution. On supprime ainsi une manutention d'un four à une cellule de refroidissement, puis à une capacité de stockage et inversement, ce qui empêche le développement des bactéries.

Il est même possible d'utiliser la chambre 1 comme four et réfrigérateur avec le même équipement que les chambres 2 et 3. Tous les dispositifs connus de réfrigération et de chauffage avec résistances. Les coffrets portables, fig. 6, utilisant préférentiellement les thermo-éléments à effet Peltier avec ou sans carbo-glace, on évite ainsi le développement des bactéries par traitement dans une unique capacité sans transfert ni soumission à une pollution extérieure.

**Revendications**

1. Dispositif distributeur de repas avec effets frigorifiques d'attente et de réchauffement intégrés avec un générateur de froid avec ventilateur de refroidissement (11) et un générateur de chaleur avec résistances (27, 28) et ventilateurs (12, 13) permettant à l'aide de chambres autonomes (1, 2, 3), la conservation des plats cuisinés en armoire frigorifique d'une part, et d'autre part soit la cuisson intégrale, soit le réchauffement total ou partiel de l'ensemble des repas au moment de leur consommation étant précisé que chaque chambre indépendante ou communiquante peut utiliser séparément ou en combinaison les émissions de froid ou de chaleur, se caractérisant en ce que les chambres (1, 2, 3) sont superposées et communiquantes entre-elles par des écrans thermiques rotatifs (19, 19', 20, 20', 21, 22) formés par deux secteurs cylindriques (15, 16) reliés par un secteur semi-cylindrique (17) formant espace d'écoulement des fluides (18) correspondant à un vide semi diamétral afin de réaliser une obturation éclipsable permettant l'obturation totale ou un passage de 50 % du volume total, ces écrans thermiques (19, 19', 20, 20', 21, 22) étant placés de part et d'autre de chaque chambre (1, 2, 3) et par la combinaison de cloisons horizontales (4, 5, 4bis) non jointives à leurs extrémités latérales.

2. Dispositif suivant la revendication 1 se caractérisant par le fait que l'armoire à paroi isotherme comporte plusieurs chambres isolées superposées (1, 2, 3) avec cloisons isothermes et étanches horizontales (4, 5, 4bis) pourvues d'étagères (6, 7, 8) ou de chariots porteurs de barquettes ou plats cuisinés.

3. Dispositif suivant la revendication 1 se caractérisant par le fait que les générateurs de chaleur (12, 13, 27, 28) ou de froid (11, 26) sont disposés par étages autonomes ou intercommuniquants avec programmateur électronique étant précisé que les capacités portables (30) sont pourvues d'un écran thermique (29) et de réchauffeurs et réfrigérateurs par thermo-élément à effet Peltier (31) ventilateur, résistances chauffantes (32) avec cloisonnements (33, 34).

4. Dispositif suivant la revendication 1 se caractérisant par le fait que suivant une variante constructive, la chambre (1) peut être munie d'une cloison horizontale (4') et d'écrans thermiques rotatifs (21', 22') et de tout appareillage de cuisson ou chauffant avec ventilation.

**Claims**

1. Meal distributing device with integrated stand-by refrigerating and heating effects which, with the aid of self-contained chambers (1, 2, 3), enables firstly cooked dishes to be kept in a cold chamber and secondly, allows for either the integral cooking or total or partial reheating of all the meals at the time they are consumed, it being specified that each independent or communicating chamber can separately or in combination use the cold or heat emissions, the device being characterized in that the chambers (1, 2, 3) are superimposed and intercommunicate by means of rotating thermal screens (19, 19', 20, 20', 21, 22) formed by two cylindrical sectors (15, 16) connected by a semi-cylindrical sector (17) forming a space for the flow of fluids (18) and corresponding to a semi-diametral vacuum so as to produce an extendable closing allowing for total closing or a passage of 50 % of the total volume, these thermal screens (19, 19', 20, 20', 21, 22) being placed both sides of each chamber (1, 2, 3) and by the combination of horizontal partitions (4, 5, 4b) not meeting at their lateral extremities with a cold generator having a cooling ventilator (11) and a heat generator with resistors (27, 28) and ventilators (12, 13).

2. Device according to claim 1 characterized in that the isothermal-walled cabinet comprises several superimposed insulated chambers (1, 2, 3) with horizontal impervious isothermal partitions (4, 5, 4 b) provided with racks (6, 7, 8) or trolleys bearing small boat-shaped pastries or cooked dishes.

3. Device according to claim 1, characterized in that the heat (12, 13, 27, 28) or cold (11, 26) generators are disposed by stages which are either self contained or intercommunicate with an electronic programmer, it being specified that the portable capacitors (30) are provided with a thermal screen (29) and ventilator Peltier effect thermoelement heaters and freezers (31) and heating resistors (32) with partitionings (33, 34).

4. Device according to claim 1, characterized in that according to a constructive variant, the chamber (1) can be fitted with a horizontal partition (4') and rotating thermal screens (21', 22') and any cooking or heating equipment having ventilation.

**Patentansprüche**

1. Vorrichtung zur Essensausgabe mit gleichzeitiger Kühl- und Aufwärmwirkung, wodurch aufgrund von unabhängigen Kammern (1, 2, 3) einerseits die Konservierung von Gerichten in Kühlschrankfächern und andererseits das vollständige Kochen oder das gesamte oder teilweise Aufwärmen der Gerichte während der Ausgabe ermöglicht wird, wobei für jede unabhängige oder kommunizierende Kammer die Kälte- oder Wärmestrahlung benutzt werden kann, dadurch gekennzeichnet, daß die Kammern (1, 2, 3) übereinander liegen und untereinander über drehbare thermische Abschirmungen (19, 19', 20, 20', 21, 22) kommunizieren, die jeweils durch zwei zylindrische Sektoren (15, 16), verbunden durch einen halbzylindrischen Sektor (17), gebildet werden, der den Durchfluß der Fluide (18) ermöglicht und dem Leerraum eines halben Durchmessers entspricht, um eine versenkbare Abdichtung zu schaffen, mit der ein vollständiges Abdichten oder ein Durchfluß von 50 % des Gesamtvolumens möglich ist und wobei diese thermischen Abschirmungen (19, 19', 20, 20', 21, 22) an beiden Seiten der Kammern (1, 2, 3) angebracht sind, sowie durch die Kombination von horizontalen Trennwänden (4, 5, 4') ohne Kontakt an ihren seitlichen Enden, mit einem Kältegenerator mit Kühlventilator (11) und einem Wärmegenerator mit Widerständen (27, 28) und Ventilatoren (12, 13).

2. Vorrichtung entsprechend Patentanspruch 1, dadurch gekennzeichnet, daß der Schrank mit isothermer Wandung mehrere isolierte übereinanderliegende Kammern (1, 2, 3) besitzt, mit isothermen und dichten horizontalen Trennwänden (4, 5, 4'), die mit Regalen (6, 7, 8) oder Unterlagen für Eßbehälter oder Fertiggerichte ausgestattet sind.

3. Vorrichtung entsprechend Patentanspruch 1, dadurch gekennzeichnet, daß die Kälte- bzw. Wärmegeneratoren (12, 13, 27, 28 bzw. 11, 26) in unabhängigen und kommunizierenden Etagen mit elektronischer Programmierung ausgestattet sind, wobei die tragbaren Kapazitäten (30) mit einer thermischen Abschirmung (29) und mit Erwärmern und Kühlern durch Thermoelemente mit Peltiereffekt (31), Heizwiderständen (32) mit Unterteilungen (33, 34) versehen sind.

4. Vorrichtung entsprechend Patentanspruch 1, dadurch gekennzeichnet, daß durch eine Konstruktionsvariante die Kammer (1) mit einer horizontalen Trennwand (4'), drehbaren thermischen Abschirmungen (21', 22') sowie mit jeglicher Koch- oder Aufwärmeinrichtung und Ventilation ausgestattet werden kann.

FIG 1

FIG 3

FIG 4

FIG 2

FIG 5

FIG 6